# NEW EUROPEAN PATENT SPECIFICATION

(11) **EP 1 761 567 B2**
(45) Date of publication and mention of the opposition decision: **15.06.2016**
(45) Mention of the grant of the patent: 28.09.2011
(21) Application number: 05749454.4
(22) Date of filing: 30.05.2005
(51) Int. Cl.: C08B 30/02, C08B 30/04, A23L 19/10

(54) **PROCESSING OF CASSAVA**
VERARBEITUNG VON KASSAVA
TRAITEMENT DU MANIOC

(30) Priority: 09.06.2004 NL 1026370
(43) Date of publication of application: 14.03.2007
(73) Proprietor: Dutch Agricultural Development & Trading Company B.V., 3295 KT 'S Gravendeel (NL)
(72) Inventor: SANDERS, Johan, Pieter, Marinus, NL-9722 WL Groningen (NL); GOENSE, Daniël, NL-6708 MA Wageningen (NL); DUN, Lambert, Willem, NL-9665 JZ Oude Pekela (NL)
(74) Representative: Voncken, Bartholomeus Maria Ch.
(86) International application number: PCT/NL2005/000393
(87) International publication number: WO 2005/121183

(56) References cited:
- BE-A- 562 541
- DE-A- 1 517 050
- DE-A- 2 634 544
- DE-A1- 1 517 050
- DE-A1- 2 634 544
- DE-C2- 2 950 315
- GB-A- 256 008
- GB-A- 853 773
- GB-A- 868 901
- US-A- 2 149 802
- US-A- 2 380 874
- US-A- 3 029 168
- SRIROTH K ET AL: "CASSAVA STARCH TECHNOLOGY: THE THAI EXPERIENCE" STARCH STARKE, WILEY-VCH VERLAG, WEINHEIM, DE, vol. 52, no. 12, December 2000 (2000-12), pages 439-449, XP000976723 ISSN: 0038-9056
- M. R. GRACE: 'Cassava processing', 1977, FAO, ROME pages 19-54 - 67-76 141-142
- FAO AND IFAD - Proceedings of the validation forum on the global cassava development strategy, Rome, 26-28 April 2000 - 2001
- "Forstering innovation in urban and peri-urban based clusters of small-scale agrifood enterprises." Dr. Chris Wheatley - not dated
- New Food Products From Cassava - A. Onabolu, A. Ablass, M. Bokanga - ISBN 978 131 141 X - 1998

## Description

At present the worldwide consumption of starch amounts to approximately 50 million tons annually, and this starch is mainly obtained from potatoes, maize, wheat and cassava. GB-A-256000 discloses a method for the manufacture of cassava meal wherein peeled cassava roots are supplied to a grating machine and the resultant meal is dried. DE-A-2 634 544 and DE-A-1 517 050 disclose methods for obtaining starch from cassava roots.

The invention relates to a method for refining cassava into starch, wherein the cassava is processed into cassava flour at a first location, which cassava flour is subsequently further processed into starch at a second location.

According to the present invention, this method comprises grating the cassava roots, adding water to the grated matter to form a slurry, removing undesired components, such as proteins, among other components, from the slurry so as to obtain a product mass and, finally, drying the product mass.

A method carried out in this manner makes it possible to realize a continuous process for obtaining cassava flour from cassava roots, wherein the method can be carried out locally (i.e. in the immediate vicinity of the production location of the cassava roots), using simple means. This is of major importance, because cassava roots are highly perishable, so that rapid processing is advantageous in that case. As a result, the losses caused by decay are reduced and the processibility is increased. Raw material for the preparation of starch can be supplied with a higherdegree of reliability. After transportation, the cassava flour can be processed into starch at a suitable location. The advantage of this is that it is possible on the one hand to work on a small scale close to the production location of the cassava roots, whilst on the other hand refining can take place elsewhere on a reasonable scale. Thus, a storable intermediate product can be obtained at a regional level, which product can subsequently be processed (refined) at a central location.

As a result of said grating of the cassava roots the cells thereof are opened and all the starch present therein is released. By removing undesired components (in particular proteins, but also (cyanide) salts and (amino) acids, for example) any protein that may be present is prevented from coagulating during the subsequent drying of the product mass and, as a result, enclosing the starch, which could no longer be extracted in that case.

It is noted here that the present invention is described herein on the basis of the processing of cassava, but that the scope of the invention is not purely limited to this application, but that it also extends to othertuberous, bulbous or root crops (such as potatoes or batatas). For the sake of the readability of the description, only cassava is generally mentioned.

In a preferred embodiment of the method according to the invention, the cassava roots are cut into parts prior to said grating, which parts are subsequently grated. Cutting the cassava roots into parts enhances the effectiveness of the grating process.

Furthermore, the addition of watertothe grated matter so as to form a slurry preferably takes place during said grating already. This is a highly effective manner of optimising the forming of a slurry already during the grating process and dissolving the undesired components (among which minerals, proteins and cyanides) to a large extent at a later stage during the process and subsequently simply washing them away. The availability of a sufficient amount of water is important in this connection. Chemicals may furthermore be added to the water.

In accordance with another embodiment of the method according to the present invention, the removal of undesired components from the slurry so as to obtain a product mass takes place by filtering the slurry, with the productmass as the residue and the water containing the components that are undesired for the flour product as the filtrate.

Such a filtering process functions as a pre-drying (dewatering) step of the slurry, as it were, which already has a very high starch content (the moisture content may already have been reduced to about 40% in that case, for example). The filtrate might be used as fertilizer.

Said filtering can take place (preferably) by means of a vacuum filter, so that a comparatively small water volume will suffice for said washing. In addition, the minerals and the like are obtained from the root in a relatively high concentration, so that reuse thereof as fertilizer becomes possible (at the lowest logistics costs).

Furthermore it is possible within this framework to wash the residue with clean water, which further helps remove the undesired components.

According to another embodiment the product mass which, as described in the foregoing, has already been (mechanically) pre-dried (dewatered), can be dried by means of hot air. A so-called vortex dryer (or a so-called thorbed dryer) may be used for this purpose. In such a dryer, the product mass swirls around and escapes from the vortex dryer when the eventual product is sufficiently dry. The hot air may have a temperature in the 100-140 °C range, with the temperature of the hot air preferably being maximally 120 °C. Also other manners of drying are conceivable, for example drying in the sun.

In order to obtain a relatively high-quality product already after the grating of the cassava roots, it is furthermore preferable to wash and at least partially peel the cassava roots prior to said grating.

The method according to the invention can be further optimised if the filtrate that is formed during the filtration of the slurry is used for washing the cassava roots. It is possible to screen the filtrate before it is used for washing the cassava roots so as to at least largely remove any undesired components therefrom.

Said peeling of the cassava roots can take place by bringing the cassava roots into scouring contact with each other during the washing process. This can be realised, for example, when the cassava is placed in a layer of water and is subsequently set moving. As a result, the outer skin will become detached and can be washed away with the washing water. The washing water may be spread over the fields, using suitable means (pumps, hoses, tank trucks, etc).

In accordance with the method according to the present invention, the cassava roots are thus grated while they are fresh, as a result of which the cells are opened and all the starch that is present is released. With the methods that are known so far, cassava rods are cut into slices, which slices are dried and subsequently ground into flour. A drawback of such a known method is the fact that not all the starch is released and that the starch is probably severely damaged.

It is noted in this connection that the term "grating" as used within the framework of the present disclosure should be understood to mean any process for dividing/chopping the cassava roots in which the cells thereof are opened; this in contrast to the term "cutting", which is generally understood to mean a process for dividing the cassava roots in which the cells remain largely intact.

According to the invention said processing of the cassava at the first location takes place by using a method according to the invention as described in the foregoing.

The invention also relates to a device for refining cassava into starch, which device comprises a first part disposed at a first location for processing the cassava into cassava flour, and a second part disposed at a second location for processing the cassava flour further into starch.

The first part of the device is comprised of a device of a type as generally disclosed in GB-A-256000 with a grating machine and a dryer. Generally, such a device is characterized by means for grating the cassava roots, means for adding water to the grated matter so as to form a slurry, means for removing undesired components, such as proteins, from the slurry so as to obtain a product mass and, finally, means for drying the product mass.

When such a device is used, the method as described in the foregoing can be realised in an effective manner.

Preferably, the device is so configured that the means for grating the cassava rods consist of rotating cylinders (which may have a diameter ranging between 55 and 85 cm, for example, and which may rotate at a speed of 3000 revolutions per minute or at a circumferential velocity of 100 m/s) provided with saw blades. The saw blades open the cell walls, causing the starch that is present to be released. The saw blades may be comb-shaped grating blades, for example.

The various means of the device according to the invention may be advantageously mounted on/in at least one standard container, in particular on/in two standard containers. This makes it possible to transport the device from location to location, using locally available means of transport, and to use the device at the locations where the production of cassava takes place.

In this framework it is advantageous if the containers are fitted with means by which they can be loaded and unloaded without the use of external aids (cranes, forklift trucks) being required.

It is also quite convenient in that case if such standard containers are provided with their own means for supplying energy, said means at least comprising a generator, for example of a diesel generator. This makes it possible to use the device at any location without being dependent on an external energy supply source. More-over, if a generator is used, the residual heat thereof can be conveniently utilised for other process steps, in particular for drying the product mass.

It is noted that in accordance with the present invention both the original slurry and the product mass obtained therefrom can be processed into starch by carrying out a refining process.

It is also preferable in that case that the second part is specially adapted for processing the cassava flour that has been obtained by carrying out the method according to the present invention. In this way the device can be optimally adapted for processing the cassava flour, which, as a result of the method according to the invention being carried out, may have a slightly altered structure in comparison with conventionally obtained cassava flour.

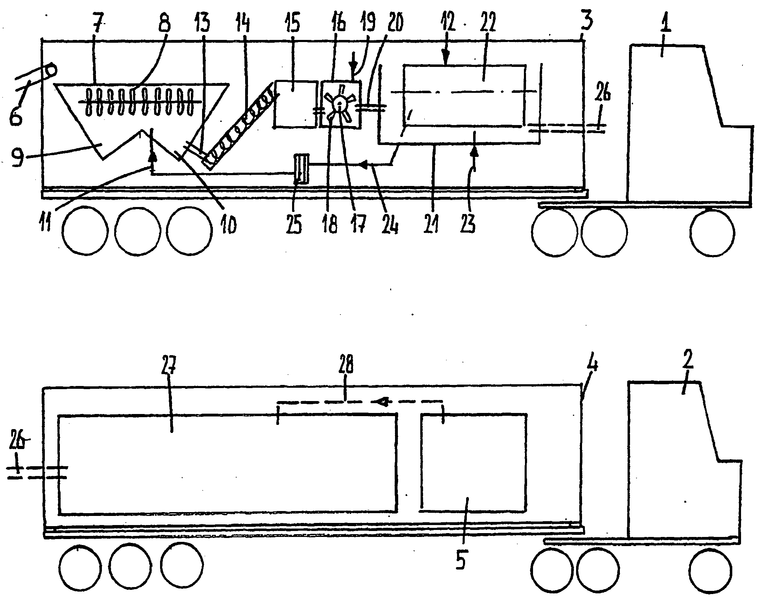

The invention will be explained in more detail hereinafter with reference to the drawing, which shows an embodiment of a first part of device according to the invention.

The only figure is a schematic side elevation of an embodiment of the first part of device according to the invention placed on two trucks.

The figure shows two trucks 1 and 2, on which standard containers (or a standard container platforms) 3 and 4 are placed. The standard containers can be transported, from location to location by means of the trucks 1, 2, where they can be offloaded and be loaded again by an installation (not shown). Such an installation may form part of the truck 1, 2 or container 3, 4 of in question.

In use, the trucks 1,2 (or the standard containers 3, 4) are positioned in close proximity to each other and are functionally coupled in a manner yet to be described. In the illustrated example, an energy-generating unit 5 (e.g. a dieset generator) is disposed inside the container 4. The energy supplied by said energy generating unit 5 (e.g. electric current) is used for energising the parts of the device that are to be described hereinafter.

Cassava, which is inspected in advance for impurities, the presence of wooden stalk portions and the like, is generally weighed and subsequently carried to a washing installation 7 via a conveyor belt 6. The washing installation comprises so-called paddle washers 8 comprising several compartments (e.g. 9 and 10). Increasingly clean water is used in the successive compartments for washing the cassava and removing the skin therefrom. Said removing of the skin takes place in that the cassava roots scour against one another in a layer of water.

A supply pipe 11 is used for supplying washing water. Said supply pipe 11 supplies the washing water from a filtering plant 12, which will be discussed in more detail yet.

Via an exhaust 13 and transport means 14, the crops and the peeled cassava roots reach cutting means 15, where the roots are cut into small parts. Grating means 16 connect to said cutting means 15 for grating the roots that have been cut into parts.

In the illustrated embodiment, the grating means 16 comprise a number of cylinders 17 fitted with projecting saw blades 18, such as comb-shaped grating blades. In a specific embodiment, the cylinders have a diameter of 55-85 cm and rotate at a speed pf 3000 revolutions per minute. Said rotation of the saw blades 18 opens the cell walls of the cassava roots, so that the starch that is present therein is released. During said grating, water is added to the grated matter via a supply pipe 19, as a result of which a slurry is formed. Chemicals may be added to the water as well, for example in order to prevent discoloration or for preservation purposes.

It is noted that the cutting means 15 may be left out in another embodiment, so that the grating means 16 connect directly to the washing installation 7.

Via transport means 20, the slurry formed in the grating means 16 reaches a trough 21, in which the aforesaid filtering plant 12 is present. Said filtering plant 12 comprises a rotating drum 22, around which a filtering cloth' extends. The drum 22 has an internal vacuum, as a result of which the slurry is sucked through the filtering cloth from the trough 21. The slurry is thereby separated into a filtrate comprising components that are undesired for certain applications, such as minerals, protein and cyanide, and a residue comprising the product mass 10 to be processed at a later stage. Washing water (fresh water) can be added to the filtering plant 12 via a pipe 23 (and possibly atomisers for atomising the added water or the like). To that end, a fixed amount of water per ton of product can be added. This amount may be very low.

The filtrate water from the filtering plant 12 is supplied to the supply pipe 11 via a discharge pipe 24 and screening means 25 for reuse in the washing installation 7. Fresh water may furthermore be added thereto (depending on the use of the product). The eventual water consumption is very low.

A product mass having a moisture content of ± 40% is obtained in the filtering plant 12. Thus the cassava slurry or pulp is subjected to a pre-drying (dewatering) step, as it were. The released minerals, proteins and cyanides are washed away to a large extent through the use of the vacuum filter (for example, the protein content of the slurry is reduced from 3% to 0.5% if the raw material is cassava). Any coagulation of protein can be prevented in an effective manner, for example during the drying phase), thus preventing starch from being enclosed as a result of partial coagulation, so that it can no longer be extracted.

Via a connecting line 26, the pre-dried product mass reaches the second part of the device, which is present on the second truck 2 (or in the container 4). Said second part mainly comprises a so-called vortex dryer 27, in which a drying process is carried out, using hot air (preferably having a temperature of maximally 120 °C). Residual heat from the energy-generating unit 5 can be used advantageously in the vortex dryer27' (corresponding to 28).

It is noted that it is also possible to use other types of dryers, of course.

Of course it is conceivable for the entire device according to the invention to be present inside a single standard container, so that only one truck is needed. If two trucks 1, 2 are used, the distribution of the device over the two standard containers 3 and 4 may furthermore be different from the distribution that is shown herein. Finally, the number of standard containers may be larger than two, in which case the various components of the device will be suitably distributed over said larger number of standard containers.

The individual components of the device as shown herein are only examples of possible embodiments. In addition, said components are represented very schematically. As an alternative to the continuously operating rotary filtering plant, filtering means that operate in batches (e.g. flat filtering means) might be used.

The invention is not limited to the embodiment as described above, which can be varied in many ways within the scope of the invention as defined in the claims.

## Claims

1. A method for refining cassava into starch, wherein the cassava is processed into cassava flour at a first location by grating the cassava roots, adding water to the grated matter to form a slurry, removing undesired components, such as proteins, among other components, from the slurry so as to obtain a product mass and, finally, drying the product mass, **characterized in that** the cassava flour obtained at said first location is subsequently further processed into starch at a second location.

2. A method according to claim 1, wherein the cassava roots are cut into parts prior to said grating, which parts are subsequently grated.

3. A method according to claim 1 or 2, wherein the addition of water to the grated matter so as to form a slurry takes place during said grating already.

4. A method according to any one of the preceding claims, wherein the removal of undesired components from the slurry so as to obtain a product mass takes place by filtering the slurry, with the product mass as the residue and the water containing the undesired components as the filtrate.

5. A method according to claim 4, wherein said filtering takes place by means of a vacuum filter.

6. A method according to claim 5, wherein the residue is washed with clean water.

7. A method according to any one of the preceding claims, wherein said drying of the product mass is carried out by drying the product mass with hot air.

8. A method according to claim 7, wherein the product mass is dried in a so-called vortex dryer (27).

9. A method according to claim 7 or 8, wherein said hot air has a temperature in the 100-140 °C range.

10. A method according to claim 9, wherein the temperature of the hot air is maximally 120 °C.

11. A method according to any one of the preceding claims, wherein the cassava roots are washed and at least partially peeled prior to said grating.

12. A method according to claim 11, wherein the filtrate is used for washing the cassava roots.

13. A method according to claim 12, wherein the filtrate is screened before it is used for washing the cassava roots so as to remove the undesired components at least to a large extent therefrom.

14. A method according to any one of the claims 11-13, wherein said peeling of the cassava roots takes place by bringing the cassava roots into scouring contact with each other during said washing.

15. A device for refining cassava into starch, which device comprises a first part disposed at a first location for processing the cassava into cassava flour, which first part comprises means (16) for grating the cassava roots, means (19) for adding water to the grated matter so as to form a slurry, means (12) for removing undesired components, such as proteins, from the slurry so as to obtain a product mass and, finally, means (27) for drying the product mass, **characterized in that** the device further comprises a second part disposed at a second location for processing the cassava flour further into starch.

16. A device according to claim 15, wherein the means (16) for grating the cassava roots consist of rotating cylinders (17) fitted with saw blades (18).

17. A device according to claim 15 or 16, wherein the means (16) for grating the cassava roots are preceded by means (15) for cutting the cassava roots into parts.

18. A device according to any one of the claims 15-17, wherein the means (19) for adding water to the grated matter so as to form a slurry are positioned within the device such that they act on the cassava roots substantially simultaneously with the means (16) for grating the cassava roots.

19. A device according to any one of the claims 15-18, wherein the means (12) for removing undesired components from the slurry for obtaining a product mass comprise filtering means for filtering the slurry, with the product mass as the residue and the water containing the undesired components as the filtrate.

20. A device according to claim 19, wherein the filtering means (12) comprise a filtering drum (22) in which a vacuum is to be generated, which filtering drum is present in a reservoir (21) for the slurry.

21. A device according to claim 20, wherein said filtering drum (22) is capable of rotation.

22. A device according to claim 19, 20 or 21, wherein means (23) are used for supplying washing water to the residue.

23. A device according to any one of the claims 15-22, wherein the means (27) for drying the product mass comprise a so-called vortex dryer.

24. A device according to any one of the claims 15-23, wherein means (7) for washing and at least partially peeling the cassava roots are disposed before the means (16) for grating the cassava roots.

25. A device according to claim 24 and applying claim 19, wherein a pipe (11) for supplying filtrate to be used in the washing of the cassava roots extends between the filtering means (12) and the means (7) for washing and at least partially peeling the cassava roots.

26. A device according to claim 25, wherein screening means are present in the pipe, which screening means function to screen the filtrate for the purpose of removing the undesired components at least to a large extent therefrom before it is used for washing the cassava roots.

27. A device according to any one of the claims 24-26, wherein the means (7) for washing and at least partially peeling the cassava roots are so-called paddle washers (8) comprising multiple compartments, each compartment containing cleaner washing water than the preceding compartment.

28. A device according to any one of the claims 15-27, wherein the various means are mounted on/in at least one standard container.

29. A device according to claim 28, wherein the standard container is fitted with its own energy supply unit (5), which comprises at least a generator, such as a diesel generator.

30. A device according to claim 29, wherein residual heat from the generator (5) is supplied to the means for drying the product mass.

31. A device according to any of the claims 15-30, wherein the second part is specially adapted for processing the cassava flour that has been obtained by carrying out the method according to any one of the claims 1-14.

## Patentansprüche

1. Ein Verfahren zum Weiterverarbeiten von Maniok zu Stärke, wobei der Maniok an einem ersten Ort zu Maniokmehl verarbeitet wird durch Raspeln der Maniokwurzeln, Hinzufügen von Wasser zu der geraspelten Masse, um einen Brei zu bilden, Entfernen von unerwünschten Bestandteilen, wie zum Beispiel Proteinen, zwischen anderen Bestandteilen, aus dem Brei, um eine Produktmasse zu gewinnen, und schließlich Trocknen der Produktmasse, **dadurch gekennzeichnet, dass** das an dem ersten Ort erhaltene Maniokmehl anschließend an einem zweiten Ort weiter zu Stärke verarbeitet wird.

2. Ein Verfahren gemäß Anspruch 1, wobei die Maniokwurzeln vor dem Raspeln in Stücke geschnitten werden, wobei die Stücke anschließend geraspelt werden.

3. Ein Verfahren gemäß Anspruch 1 oder 2, wobei das Hinzufügen von Wasser zu der geraspelten Masse, um einen Brei zu bilden, bereits während des Raspelns stattfindet.

4. Ein Verfahren gemäß einem der vorhergehenden Ansprüche, wobei das Entfernen von unerwünschten Bestandteilen aus dem Brei, um eine Produktmasse zu gewinnen, durch Filtern des Breis stattfindet, wobei die Produktmasse der Rest ist und das Wasser die unerwünschten Bestandteile als Filtrat enthält.

5. Ein Verfahren gemäß Anspruch 4, wobei das Filtern mittels eines Vakuumfilters stattfindet.

6. Ein Verfahren gemäß Anspruch 5, wobei der Rest mit sauberem Wasser gewaschen wird.

7. Ein Verfahren gemäß einem der vorhergehenden Ansprüche, wobei das Trocknen der Produktmasse durch Trocknen der Produktmasse mit heißer Luft durchgeführt wird.

8. Ein Verfahren gemäß Anspruch 7, wobei die Produktmasse in einem sogenannten Wirbeltrockner (27) getrocknet wird.

9. Ein Verfahren gemäß Anspruch 7 oder 8, wobei die heiße Luft eine Temperatur im Bereich von 100 bis 140°C hat.

10. Ein Verfahren gemäß Anspruch 9, wobei die Temperatur der heißen Luft maximal 120°C beträgt.

11. Ein Verfahren gemäß einem der vorhergehenden Ansprüche, wobei die Maniokwurzeln vor dem Raspeln gewaschen und zumindest teilweise geschält werden.

12. Ein Verfahren gemäß Anspruch 11, wobei das Filtrat zum Waschen der Maniokwurzeln verwendet wird.

13. Ein Verfahren gemäß Anspruch 12, wobei das Filtrat durchgesiebt wird, bevor es zum Waschen der Maniokwurzeln verwendet wird, um die unerwünschten Bestandteile zumindest weitgehend daraus zu entfernen.

14. Ein Verfahren gemäß einem der Ansprüche 11 bis 13, wobei das Schälen der Maniokwurzeln stattfindet, indem die Maniokwurzeln während des Waschens miteinander in Scheuerkontakt gebracht werden.

15. Eine Vorrichtung zum Weiterverarbeiten von Maniok zu Stärke, wobei die Vorrichtung einen ersten Teil aufweist, der an einem ersten Ort angeordnet ist, um den Maniok zu Maniokmehl zu verarbeiten, welcher erste Teil Mittel (16) zum Raspeln der Maniokwuzeln, Mittel (19) zum Hinzufügen von Wasser zu der geraspelten Masse, um einen Brei zu bilden, Mittel (12) zum Entfernen von unerwünschten Bestandteilen, zum Beispiel Proteinen, aus dem Brei, um eine Produktmasse zu gewinnen, und schließlich Mittel (27) zum Trocknen der Produktmasseaufweist, **dadurch gekennzeichnet, dass** die Vorrichtung weiter einen zweiten Teil aufweist, der an einem zweiten Ort angeordnet ist, um das Maniokmehl weiter zu Stärke zu verarbeiten.

16. Eine Vorrichtung gemäß Anspruch 15, wobei die Mittel (16) zum Raspeln der Maniokwurzeln aus rotierenden Zylindern (17) bestehen, die mit Sägeblättern (18) ausgestattet sind.

17. Eine Vorrichtung gemäß Anspruch 15 oder 16, wobei den Mitteln (16) zum Raspeln der Maniokwurzeln Mittel (15) zum In-Stücke-Schneiden der Maniokwurzeln vorangehen.

18. Eine Vorrichtung gemäß einem der Ansprüche 15 bis 17, wobei die Mittel (19) zum Hinzufügen von Wasser zu der geraspelten Masse, um einen Brei zu bilden, innerhalb der Vorrichtung angeordnet sind, so dass sie im Wesentlichen gleichzeitig mit den Mitteln (16) zum Raspeln der Maniokwurzeln auf die Maniokwurzeln einwirken.

19. Eine Vorrichtung gemäß einem der Ansprüche 15 bis 18, wobei die Mittel (12) zum Entfernen von unerwünschten Bestandteilen aus dem Brei, um eine Produktmasse zu gewinnen, Filtermittel aufweisen, um den Brei zu filtern, wobei die Produktmasse der Rest ist und das Wasser die unerwünschten Bestandteile als Filtrat enthält.

20. Eine Vorrichtung gemäß Anspruch 19, wobei die Filtermittel (12) eine Filtertrommel (22) aufweisen, in der ein Vakuum zu erzeugen ist, wobei die Filtertrommel sich in einem Sammelbehälter (21) für den Brei befindet.

21. Eine Vorrichtung gemäß Anspruch 20, wobei die Filtertrommel (22) in der Lage ist, sich zu drehen.

22. Eine Vorrichtung gemäß Anspruch 19, 20 oder 21, wobei Mittel (23) verwendet werden, um dem Rest Waschwasser zuzuführen.

23. Eine Vorrichtung gemäß einem der Ansprüche 15 bis 22, wobei die Mittel (27) zum Trocknen der Produktmasse einen sogenannten Wirbeltrockner aufweisen.

24. Eine Vorrichtung gemäß einem der Ansprüche 15 bis 23, wobei Mittel (7) zum Waschen und zumindest teilweisen Schälen der Maniokwurzeln vor den Mitteln (16) zum Raspeln der Maniokwurzeln angeordnet sind.

25. Eine Vorrichtung gemäß Anspruch 24 und den Anspruch 19 anwendend, wobei sich ein Rohr (11) zum Zuführen von beim Waschen der Maniokwurzeln zu verwendendem Filtrat zwischen den Filtermitteln (12) und den Mitteln (7) zum Waschen und zumindest teilweisen Schälen der Maniokwurzeln erstreckt.

26. Eine Vorrichtung gemäß Anspruch 25, wobei sich in dem Rohr Siebmittel befinden, wobei die Siebmittel funktionieren, um das Filtrat zu dem Zweck, die unerwünschten Bestandteile zumindest weitgehend daraus zu entfernen, durchzusieben, bevor es zum Waschen der Maniokwurzeln verwendet wird.

27. Eine Vorrichtung gemäß einem der Ansprüche 24 bis 26, wobei die Mittel (7) zum Waschen und zumindest teilweisen Schälen der Maniokwurzeln sogenannte Paddelwaschvorrichtungen (8) sind, die mehrere Kammern aufweisen, wobei jede Kammer saubereres Waschwasser als die vorhergehende Kammer enthält.

28. Eine Vorrichtung gemäß einem der Ansprüche 15 bis 27, wobei die verschiedenen Mittel an/in mindestens einem Standardcontainer montiert sind.

29. Eine Vorrichtung gemäß Anspruch 28, wobei der Standardcontainer mit seiner eigenen Energieversorgungseinheit (5) ausgestattet ist, die mindestens einen Generator, zum Beispiel einen Dieselgenerator aufweist.

30. Eine Vorrichtung gemäß Anspruch 29, wobei den Mitteln zum Trocknen der Produktmasse Restwärme aus dem Generator (5) zugeführt wird.

31. Eine Vorrichtung gemäß einem der Ansprüche 15 bis 30, wobei der zweite Teil speziell zum Verarbeiten des Maniokmehls angepasst ist, das mittels des Durchführens des Verfahrens gemäß einem der Ansprüche 1 bis 14 gewonnen wurde.

## Revendications

1. Procédé de raffinage de manioc en amidon, dans lequel le manioc est transformé en farine de manioc sur un premier site par le râpage des racines de manioc, l'addition d'eau à la matière râpée pour former une suspension, l'élimination des composants indésirables tels que les protéines, entre autres composants, de la suspension de façon à obtenir une masse de produit et enfin, le séchage de la masse de produit, **caractérisé en ce que** ladite farine de manioc obtenue sur le premier site est ensuite transformée encore en amidon sur un deuxième site.

2. Procédé selon la revendication 1, dans lequel les racines de manioc sont coupées en morceaux avant ledit râpage, lesdits morceaux étant ensuite râpés.

3. Procédé selon la revendication 1 ou la revendication 2, dans lequel l'addition d'eau à la matière râpée de façon à former une suspension a déjà lieu pendant le râpage.

4. Procédé selon l'une quelconque des revendications précédentes, dans lequel le retrait des composants indésirables de la suspension de façon à obtenir une masse de produit s'effectue par filtrage de la suspension, la masse de produit constituant le résidu et l'eau contenant les composants indésirables constituant le filtrat.

5. Procédé selon la revendication 4, dans lequel ledit filtrage est réalisé au moyen d'un filtre à vide.

6. Procédé selon la revendication 5, dans lequel le résidu est lavé avec de l'eau propre.

7. Procédé selon l'une quelconque des revendications précédentes, dans lequel ledit séchage de la masse de produit est réalisé en séchant la masse de produit à l'air chaud.

8. Procédé selon la revendication 7, dans lequel la masse de produit est séchée dans un séchoir dit "vortex" (27).

9. Procédé selon la revendication 7 ou la revendication 8, dans lequel ledit air chaud a une température de l'ordre de 100 à 140° C.

10. Procédé selon la revendication 9, dans lequel la température de l'air chaud est au maximum de 120° C.

11. Procédé selon l'une quelconque des revendications précédentes, dans lequel les racines de manioc sont lavées et au moins partiellement pelées avant ledit râpage.

12. Procédé selon la revendication 11, dans lequel le filtrat est utilisé pour laver les racines de manioc.

13. Procédé selon la revendication 12, dans lequel le filtrat est tamisé avant d'être utilisé pour le lavage des racines de manioc de façon à éliminer de celui-ci les composants indésirables au moins dans une large mesure.

14. Procédé selon l'une quelconque des revendications 11 à 13, dans lequel ledit pelage des racines de manioc s'effectue en plaçant les racines de manioc en contact par frottement les unes avec les autres pendant ledit lavage.

15. Dispositif de raffinage du manioc en amidon, ledit dispositif comprenant une première partie disposée sur un premier site de transformation du manioc en farine de manioc, la première partie comprenant des moyens (16) de râpage des racines de manioc, des moyens (19) d'addition d'eau à la matière râpée de façon à former une suspension, des moyens (12) d'élimination des composants indésirables tels que les protéines de la suspension de façon à obtenir une masse de produit, enfin, des moyens (27) de séchage de la masse de produit, **caractérisé en ce que** le dispositif comprenant en outre une deuxième partie disposée sur un deuxième site pour transformer encore la farine de manioc en amidon.

16. Dispositif selon la revendication 15, dans lequel les moyens (16) de râpage des racines de manioc consistent en cylindres rotatifs (17) dotés de lames de scie (10).

17. Dispositif selon la revendication 15 ou la revendication 16, dans lequel les moyens (16) de râpage des racines de manioc sont précédés de moyens (15) de coupage en morceaux des racines de manioc.

18. Dispositif selon l'une quelconque des revendications 15 à 17, dans lequel les moyens (19) d'addition d'eau au manioc râpé de façon à former une suspension sont placés dans le dispositif de sorte qu'ils agissent sur les racines de manioc de façon substantiellement simultanée avec les moyens (16) de râpage des racines de manioc.

19. Dispositif selon l'une quelconque des revendications 15 à 18, dans lequel les moyens (12) d'élimination des composants indésirables de la suspension pour obtenir une masse de produit comprennent des moyens de filtrage de la suspension, la masse de produit constituant le résidu et l'eau contenant les composants indésirables constituant le filtrat.

20. Dispositif selon la revendication 19, dans lequel les moyens de filtrage (12) comprennent un tambour de filtrage (22) dans lequel un vide doit être généré, ledit tambour de filtrage étant présent dans un réservoir (21) pour la suspension.

21. Dispositif selon la revendication 20, dans lequel ledit tambour de filtrage (22) peut tourner.

22. Dispositif selon la revendication 19, la revendication 20 ou la revendication 21, dans lequel les moyens (23) sont utilisés pour fournir de l'eau de lavage au résidu.

23. Dispositif selon l'une quelconque des revendications 15 à 22, dans lequel les moyens (27) de séchage de la masse de produit comprennent un séchoir dit "vortex".

24. Dispositif selon l'une quelconque des revendications 15 à 23, dans lequel les moyens (7) de lavage et au moins partiellement de pelage des racines de manioc sont disposés avant les moyens (16) de râpage des racines de manioc.

25. Dispositif selon la revendication 24 et appliquant la revendication 19, dans lequel un tuyau (11) pour fournir le filtrat à utiliser dans le lavage des racines de manioc s'étend entre les moyens de filtrage (12) et les moyens (7) de lavage et au moins partiellement de pelage des racines de manioc.

26. Dispositif selon la revendication 25, dans lequel des moyens de tamisage sont présents dans le tuyau, lesdits moyens de tamisage fonctionnant de façon à tamiser le filtrat afin d'éliminer de celui-ci les composants indésirables au moins dans une large mesure avant qu'il soit utilisé pour le lavage des racines de manioc.

27. Dispositif selon l'une quelconque des revendications 24 à 26, dans lequel les moyens (7) de lavage et au moins partiellement de pelage des racines de manioc sont des laveurs à spatules (8) comprenant de multiples compartiments, chaque compartiment contenant de l'eau de lavage plus propre que celle du compartiment précédent.

28. Dispositif selon l'une quelconque des revendications 15 à 27, dans lequel les divers moyens sont montés sur/dans au moins un conteneur standard.

29. Dispositif selon la revendication 28, dans lequel le conteneur standard est équipé de sa propre unité d'alimentation en énergie (5) qui comprend au moins un générateur tel qu'un générateur diesel.

30. Dispositif selon la revendication 29, dans lequel la chaleur résiduelle du générateur (5) est fournie aux moyens de séchage de la masse de produit.

31. Dispositif selon l'une quelconque des revendications 15 à 30, dans lequel la deuxième partie est spécifiquement adaptée pour transformer la farine de manioc qui a été obtenue en réalisant le procédé selon l'une quelconque des revendications 1 à 14.
